# EUROPEAN PATENT APPLICATION

(11) **EP 2 214 244 A1**
(43) Date of publication of application: **04.08.2010**
(21) Application number: 08849381.2
(22) Date of filing: 11.11.2008
(51) Int. Cl.: H01M 8/04

(54) **COUPLER FOR FUEL CELL AND FUEL CELL**

(30) Priority: 16.11.2007 JP 2007297598
(71) Applicant: Kabushiki Kaisha Toshiba, Minato-ku Tokyo 105-8001 (JP); Toyo Seikan Kaisha, Ltd., Tokyo 100-8522 (JP)
(72) Inventor: TAKAHASHI, Kenichi, Tokyo 105-8001 (JP); KAWAMURA, Koichi, Tokyo 105-8001 (JP); KANNO, Minoru, Yokohama-shi Kanagawa 230-0001 (JP); YOSHIHIRO, Kenji, Yokohama-shi Kanagawa 2300001 (JP)
(74) Representative: Henkel, Feiler & Hänzel
(86) International application number: PCT/JP2008/003255
(87) International publication number: WO 2009/063611

(57) **Abstract**

A coupler (1) for a fuel cell has a socket (Is) which is provided to the fuel cell (2) and has a valve (40) and an urging component (53) for urging the valve (40) in the direction of closing it and a nozzle (In) which is provided to a fuel cartridge (3) for storing a liquid fuel for the fuel cell and has a valve (14) and an urging component (18) for urging the valve (14) in the direction of closing it. The coupler (1) for a fuel cell is used to supply the liquid fuel stored in the fuel cartridge (3) to the fuel cell (2) by opening both the valves (14, 40) by contacting them mutually when the socket (Is) and the nozzle (In) are connected. The coupler (1) for a fuel cell is constructed such that at least one valve (40 (14)) selected from the socket (Is) side and the nozzle (In) side has a head section (40a (14a)) and rod sections (40b, 40c (14b, 14c)) arranged at opposite ends axially of the head section (40a (14a)) and such that the rod section (40b (14b)) on the contact side is mainly made of a metal member.

## Description

### Technical Field

The present invention relates to a coupler for a fuel cell and a fuel cell using it.

### Background Art

In recent years, attempts have been made to use a fuel cell as a power source for various types of portable electronic equipment such as a notebook computer, a cellular phone and the like to make it possible to use them for a long time without recharging. The fuel cell has characteristics that electricity can be generated by merely supplying a fuel and air and generated continuously for a long time by replenishing the fuel. Therefore, if the fuel cell can be made compact, it is a very advantageous system as a power source for portable electronic equipment.

Especially, a direct methanol fuel cell (DMFC) using a methanol fuel having a high energy density is promising as a power source or the like for portable appliances because it can be made compact and its fuel can also be handled with ease. As a method of supplying the liquid fuel of the DMFC, there are known an active method such as a gas supply type, a liquid supply type or the like and a passive method such as an inside vaporization type or the like which supplies the liquid fuel from a fuel tank to a fuel electrode by vaporizing in the cell. The passive method is advantageous for miniaturization of the DMFC.

A passive type DMFC of an internal vaporization type or the like vaporizes the liquid fuel stored in a fuel storing section via, for example, a fuel-impregnated layer, a fuel vaporization layer or the like to supply to the fuel electrode (see, for example, Patent References 1 and 2). The liquid fuel is supplied to the fuel storing section by means of a fuel cartridge. When a satellite type (external injection type) fuel cartridge is used, a coupler comprising a pair of nozzle and socket having a valve mechanism therein is used to supply the liquid fuel by attaching the socket to the fuel storing section or the like of the DMFC and the nozzle to the fuel cartridge, connecting the nozzle attached to the fuel cartridge to the socket attached to the fuel storing section or the like of the DMFC, and contacting the valves arranged within the above valve mechanisms to bring into an open state (see, for example, Patent Reference 3).

The passive type DMFC of an internal vaporization type or the like is now under downsizing in order to mount on, for example, portable electronic equipment. As a result, a socket to be mounted on the fuel storing section or the like of the DMFC and a nozzle mounted on the fuel cartridge are under downsizing. With the progresses of miniaturization of the above socket and nozzle, the valve to be disposed within them is also formed to be small and to have a small diameter. As such a valve, one having a rod section with a diameter of, for example, about 1 mm is used, and one having a diameter of about 0.8 mm is also being considered in view of further downsizing and diameter reduction.

But, since a conventional valve is made of a resin material and does not necessarily have high strength, its strength tends to become lower with the above-described downsizing and diameter reduction. The valve with lower strength might be deformed or broken if an excessive load is applied when the socket and the nozzle are connected or separated. Since the valve mainly configures the valve mechanism of the socket and the nozzle, it becomes difficult to operate the valve mechanism properly in case of deformation or breakage, and for example, it becomes difficult to supply the liquid fuel from the fuel cartridge to the DMFC when connected, and the liquid fuel might leak from the DMFC and the fuel cartridge in an unconnected state.
Patent Reference 1: JP-B2 3413111 (Patent Registration)
Patent Reference 2: JP-A 2004-171844 (KOKAI)
Patent Reference 3: JP-A 2004-127824 (KOKAI)

### Disclosure of the Invention

The present invention has been made in view of the above circumstances and provides a coupler for a fuel cell, which has excellent reliability and suppresses, for example, a valve from being deformed or damaged when a socket and a nozzle are connected or separated, and provides a fuel cell using it.

A coupler for a fuel cell according to an embodiment of the present invention comprises a socket which is provided to the fuel cell and has a valve and an urging component for urging the valve in the direction of closing it and a nozzle which is provided to a fuel cartridge for storing a liquid fuel for the fuel cell and has a valve and an urging component for urging the valve in the direction of closing it, to supply the liquid fuel stored in the fuel cartridge to the fuel cell by opening both the valves by contacting mutually when the socket and the nozzle are connected, wherein at least one valve selected from the socket side and the nozzle side has a head section and rod sections arranged at opposite ends axially of the head section, and the rod section on the contact side is mainly made of a metal member.

A fuel cell according to an embodiment of the present invention comprises the socket provided with the valve having its rod section on the contact side in the coupler for a fuel cell described above mainly made of the metal member; a fuel storing section for storing a liquid fuel supplied via the socket; and an electromotive portion for generating power by using the liquid fuel.

### Brief Description of the Drawings

[FIG. 1] FIG. 1 is a schematic view showing a coupler for a fuel cell and a fuel cell using it according to the invention.
[FIG. 2] FIG. 2 is a sectional view (unconnected state) showing an example of the coupler for a fuel cell of the invention.
[FIG. 3] FIG. 3 is a sectional view showing in a magnified state the socket shown in FIG. 2.
[FIG. 4] FIG. 4 is a sectional view showing a connected state of the coupler for a fuel cell shown in FIG. 2.
[FIG. 5] FIG. 5 is an appearance diagram showing an example of a valve used in the invention.
[FIG. 6] FIGs. 6A to 6E are a top view, a plan view, a bottom view, an A-A sectional view and a B-B sectional view of the valve shown in FIG. 5.
[FIG. 7] FIGs. 7A and 7B are sectional views showing modified examples of the valve shown in FIG. 5.
[FIG. 8] FIG. 8 is an appearance diagram showing a valve having a Y-shaped cross-sectional shape when viewed axially of a contact-side rod section.
[FIG. 9] FIG. 9 is an appearance diagram showing a valve having a star-shaped cross-sectional shape when viewed axially of a contact-side rod section.
[FIG. 10] FIG. 10 is an appearance diagram showing a valve having a gear-shaped cross-sectional shape when viewed axially of a contact-side rod section.
[FIG. 11] FIG. 11 is an appearance diagram showing a valve with a contact-side rod section having a cylindrical shape.
[FIG. 12] FIG. 12 is an appearance diagram showing another example of the valve with a contact-side rod section having a cylindrical shape.
[FIG. 13] FIGs. 13A to 13B are views showing an example of a production method of a metal member.
[FIG. 14] FIGs. 14A and 14B are views showing another production method of the metal member.
[FIG. 15] FIG. 15 is a sectional view showing an example of the fuel cell of the invention.

### Explanation of Numerals

1... coupler for fuel cell, 1n... nozzle, 1s... socket, 2... fuel cell, 3... fuel cartridge, 4... fuel battery cell, 5... fuel storing section, 6... fuel receiving portion, 7... fuel cartridge body, 11... nozzle head, 13... key portion, 14... valve, 14a... head section, 14b... rod section (contact side), 14c... rod section (rear end side), 15... valve holder, 16... valve seat, 17... O-ring, 18... elastic body, 20... key ring, 21... container nozzle, 31... outer cylinder portion, 32... inner cylinder portion, 34... O-ring, 35... guide member, 36... nozzle holding mechanism, 37... rubber holder, 40... valve, 40a... head section, 40b... rod section (contact side), 40c... rod section (rear end side), 40d... projected portions, 40e... fuel passage, 40f... cutout portion, 40g... hole portion, 41... metal member, 41a... rod formation section, 41b... buried section, 41c... anchor portion, 41m... first metal plate, 41n... second metal plate, 41p... cutout portion, 41q... cutout portion, 41r... first metal material, 41s... second metal material, 42... resin material section, 51... valve seat, 52... O-ring, 53... elastic body, 54... key groove, 61... gas selectively permeable membrane, 62... anode catalyst layer, 63... anode gas diffusion layer, 64... cathode catalyst layer, 65... cathode gas diffusion layer, 66... electrolyte membrane, 67... anode conductive layer, 68... cathode conductive layer, 69, 70... O-ring, 71... moisture retaining layer, 72... surface layer, 73... cover

### Mode for Carrying out the Invention

Modes of conducting the present invention will be described below with reference to the drawings.

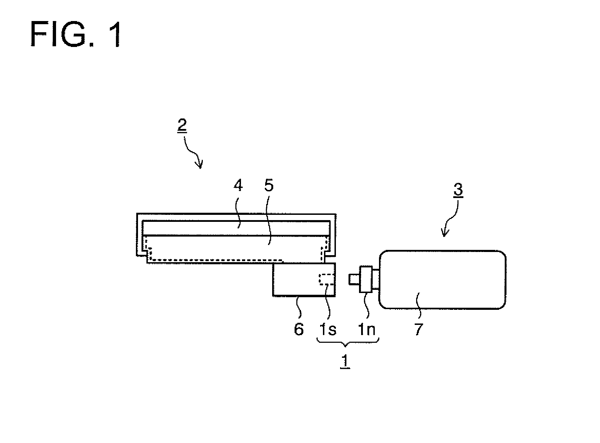

FIG. 1 shows a coupler 1 for a fuel cell (hereafter simply called a coupler) of the invention, a fuel cell 2 using it and a fuel cartridge 3 (hereafter simply called a cartridge). The coupler 1 is a connection mechanism used to supply the liquid fuel from the cartridge 3 to the fuel cell 2 and configured of a socket 1s which is a connection mechanism on the side of the fuel cell 2 and a nozzle In which is a connection mechanism on the side of the cartridge.

The fuel cell 2 is comprised of a fuel battery cell 4 which becomes an electromotive portion, a fuel storing section 5 which stores the liquid fuel to be supplied to the fuel battery cell 4, and a fuel receiving portion 6 which supplies the liquid fuel to the fuel storing section 5. The socket Is which is one of the members configuring the coupler 1 is disposed in the fuel receiving portion 6. The socket Is has a valve mechanism therein as described later and is in a closed state except when the liquid fuel is supplied. The fuel cell 2 may have a structure that the liquid fuel is supplied directly from the fuel receiving portion 6 to the fuel battery cell 4 without through the fuel storing section 5.

Meanwhile, the cartridge 3 has a cartridge body 7 which is a container for storing the liquid fuel and is provided at its leading end with the nozzle In, which discharges the liquid fuel stored in the cartridge body 7 and is the other of the members configuring the coupler 1. The nozzle In also has a valve mechanism therein as described later and is in a closed state except when the liquid fuel is discharged. This cartridge 3 is a so-called satellite type (external injection type) cartridge and connected only when the liquid fuel is injected into the fuel cell 2.

The cartridge body 7 stores a liquid fuel suitable for the fuel cell 2, for example, a methanol fuel such as an aqueous methanol solution having a variable concentration, pure methanol or the like for a direct methanol fuel cell (DMFC). The liquid fuel stored in the cartridge body 7 is not necessarily limited to the methanol fuel but may be another liquid fuel, for example, an ethanol fuel such as an aqueous ethanol solution or pure ethanol, a propanol fuel such as an aqueous propanol solution or pure propanol, a glycol fuel such as an aqueous glycol solution or pure glycol, dimethyl ether or formic acid. At any event, a liquid fuel suitable for the fuel cell 2 is stored.

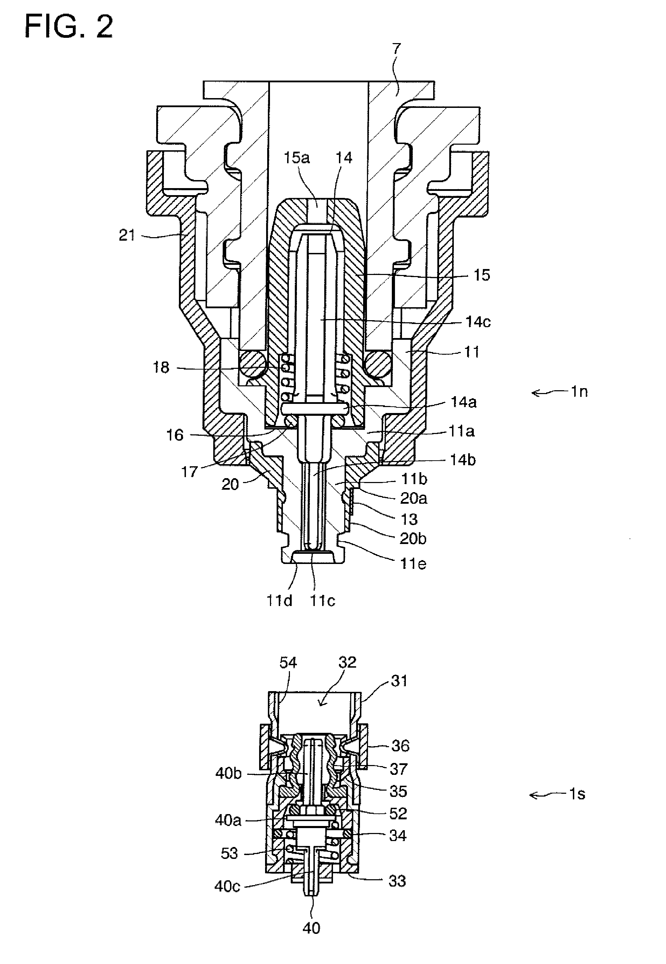

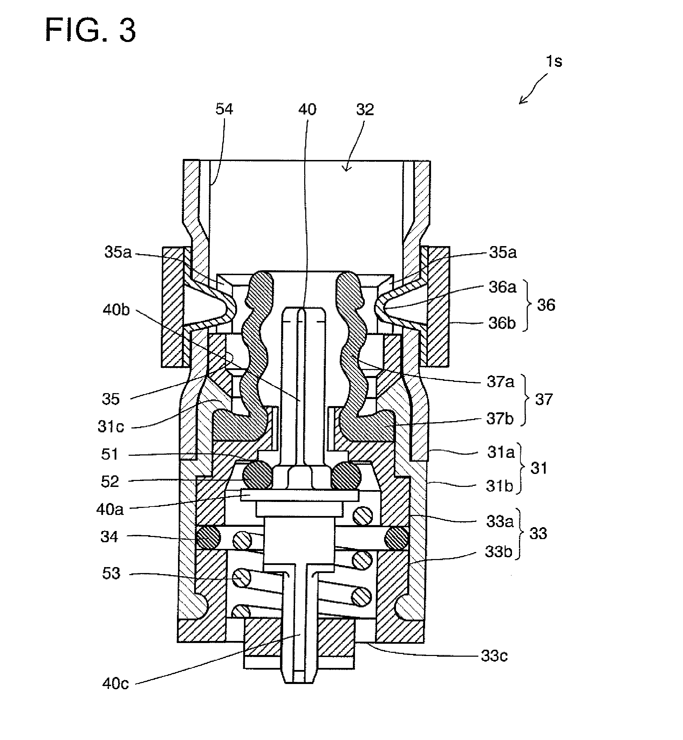

A specific structure of the coupler 1 is described below with reference to FIG. 2 and FIG. 3. FIG. 2 is a partial cross sectional view showing the socket 1s and the nozzle In configuring the coupler 1, which are in a state before connection. FIG. 3 shows a magnified state of the socket Is shown in FIG. 2. In the following description, the leading end denotes an end side (upper side in the drawing) of the socket Is into which the nozzle In is inserted and an end side (lower side in the drawing) of the nozzle In which is inserted into the socket Is.

The nozzle In is also called a male coupler or a plug and disposed to cover the opening portion on the tip end of the cartridge body 7. A nozzle head 11 is mainly comprised of a cylindrical base section 11a, in which the tip end of the cartridge body 7 is fitted, and a small-diameter shaft section 11b which is formed at the tip end. A shaft hole is formed in the shaft section 11b, and a nozzle opening 11c which is connected to the shaft hole is formed in its tip end.

A recessed portion 11d is formed in the top face which is the tip end surface of the shaft section 11b. The recessed portion 11d is formed by recessing the top face of the shaft section 11b, and the nozzle opening I 1c is formed in the bottom of die recessed portion 11d. The recessed portion 11d functions as a storing portion for the liquid fuel remaining (adhering to) on the tip end of the nozzle In, so that an operator is prevented from touching the liquid fuel. A peripheral groove 11e which is a recessed portion to be fitted with a nozzle holding mechanism 36 of the socket Is described later is formed in an external peripheral surface of the shaft section 11b of the nozzle head 11. In addition, a key portion 13, which functions as fuel identification means, is disposed mainly on an external peripheral surface of the shaft section 11b of the nozzle head 11 via a key ring 20 described later. The fuel identification means is configured of the key portion 13 and a key groove 54 which is on the side of the socket Is as described later.

A cup-like valve holder 15 which holds a valve 14 therein is disposed within the base section 11a. The valve holder 15 defines a valve chamber and is fixed with the outer edge portion of its tip end held between the cartridge body 7 and the base section 11a, and a communication hole 15a which becomes a liquid fuel passage is formed at the rear end portion. The valve 14 has a head section 14a and rod sections 14b and 14c which are formed at opposite ends axially. The rod section 14b on the tip end side is a rod section (rod section of the contact side) which is in contact with the rod section 40b on the side of the socket Is described later. The head section 14a is disposed within the valve chamber defined by the valve holder 15, and the rod section 14b is housed in the shaft hole of the shaft section 11b. Thus, the valve 14 is held by them to be movable back and forth axially.

An O-ring 17 is disposed between the head section 14a and a valve seat 16 which is attached to the inside of the base section 11a. A force to press the head section 14a to the valve seat 16 by an elastic body 18 such as a compression spring or the like is applied to the valve 14, thereby pressing the O-ring 17 by them.

In an unconnected state, the O-ring 17 is pressed to the valve seat 16 by the head section 14a to bring the fuel passage in the nozzle 1n into a closed state. Meanwhile, when the nozzle In is connected to the socket Is, the valve 14 retracts to separate the head section 14a and the O-ring 17 from the valve seat 16, and the fuel passage in the nozzle In is put into an open state. Since the liquid fuel flows from the cartridge body 7 into the valve holder 15 through a communication hole 15a, the liquid fuel passage in the nozzle In is brought into an open state, allowing to supply the liquid fuel to the socket 1s.

The key ring 20, which is a ring-shaped member having a cam mechanism, and a container nozzle 21 are disposed on the outer surface of the nozzle head 11. During ordinary use, the key ring 20 is engaged with the nozzle head 11 by press-fitting. If a force of bending, twisting or the like is applied when the cartridge 3 is connected to the fuel cell 2, the key ring 20 is rotationally raised by the cam mechanism to release the connected state to separate the nozzle In from the socket 1s. For example, the container nozzle 21 is screwed onto the cartridge body 7, so that the nozzle In having the nozzle head 11, the valve 14 and the like is fixed to the tip end of the cartridge body 7.

Meanwhile, the socket Is is also called a female coupler. The socket Is which is shown in a magnified state in FIG. 3 has an outer cylinder portion 31 having a cylindrical shape, and its front end forms a nozzle insertion port 32 having a substantially recessed cross-sectional shape. For example, the outer cylinder portion 31 is configured of a front outer cylinder portion 31a having a substantially cylindrical shape, and a rear outer cylinder portion 31b having a substantially cylindrical shape, and the front outer cylinder portion 31a is fixed to an upper outer portion of the rear outer cylinder portion 31b.

An inner cylinder portion 33 which defines the valve chamber is disposed inside the outer cylinder portion 31, and the inner cylinder portion 33 is configured of, for example, an intermediate inner cylinder portion 33a and a rear inner cylinder portion 33b. An O-ring 34 is interposed between the intermediate inner cylinder portion 33a and the rear inner cylinder portion 33b to enhance airtightness of the valve chamber.

The front outer cylinder portion 31a has a function to guide the outer circumferential surface of the nozzle head 11 when the nozzle 1n is connected by inserting. A tip end of the nozzle head 11 is not entirely guided by the front outer cylinder portion 31a, and there is a gap between them. Therefore, a ring-shaped guide member 35 is arranged in the socket Is to guide the tip end of the nozzle 1n (nozzle head 11).

The guide member 35 is arranged inside the front outer cylinder portion 31a and on the front end side of the rear outer cylinder portion 31b. The guide member 35 has plural cutout portions 35a on its front end, a hook portion 36a which is protruded toward the inner diameter side of the nozzle holding mechanism 36 described later is disposed to pass through the cutout portions 35a, and the guide member 35 is pressed to the rear outer cylinder portion 31b by the nozzle holding mechanism to prevent it from dropping from the socket 1s.

The guide member 35 has an inner shape corresponding to the shape of the tip end of the nozzle head 11. Thus, the tip end of the nozzle In connected to the socket Is is guided to restrict an inclination of the nozzle In in the connected state. In other words, when the nozzle In is in the state connected to the socket Is, the guide member 35 is arranged at a portion positioned at the tip end of the nozzle head 11. Thus, an effect of guiding the nozzle In at the time of connection and a centering effect based on it can be obtained. Thus, the inclination of the nozzle In in the connected state can be restricted

An elastic holder 37 such as a rubber holder is mounted on the intermediate inner cylinder portion 33a. The elastic holder 37 has a cylindrical holder body 37a which is elasticized axially on the basis of its bellows-like shape and material property (rubber elasticity), and a flange portion 37b which is provided on its rear end. The elastic holder 37 has the flange portion 37b fixed between the intermediate inner cylinder portion 33a and a ring-shaped projected portion 31c formed on the rear outer cylinder portion 31b.

The elastic holder 37 is a sealing member which forms a contacting seal face with the nozzle head 11 by fitting its tip end into the recessed portion 11d of the nozzle head 11, and its inside is determined to be a liquid fuel passage. In other words, the elastic holder 37 is a sealing member which seals against the outside when the valve mechanism of the socket Is is released. The recessed portion 11d formed in the shaft section 11b of the nozzle head 11 also has a function of sealing by forming the contacting seal face when it is fitted onto the tip end portion of the elastic holder 37.

A valve 40 is disposed within the socket Is. The valve 40 has a head section 40a and rod sections 40b and 40c which are formed at opposite ends axially. Here, the rod section 40b of the tip end side is a rod section (rod section on the contact side) which is in contact with the rod section 14b of the valve 14 on the side of the nozzle 1n. The head section 40a is disposed within the valve chamber which is defined by the intermediate inner cylinder portion 33a and the rear inner cylinder portion 33b, the rod section 40b is housed in the elastic holder 37, and the valve 40 is made movable back and forth axially by them.

An O-ring 52 is disposed between the head section 40a and a valve seat 51 which is formed on the inner surface of the front end side of the intermediate inner cylinder portion 33a. A force for pressing the head section 40a to the tip end side by an elastic body 53 such as a compression spring or the like is always applied to the valve 40 to press the O-ring 52, and the fuel passage in the socket Is is put in a closed state. Meanwhile, when the nozzle In is connected to the socket Is, the valve 40 retracts to separate the head section 40a and the O-ring 52 from the valve seat 51, and the fuel passage in the socket Is is brought into an open state.

The rear inner cylinder portion 33b is provided with a communication hole 33c which is connected to the fuel storing section 5 through the fuel receiving portion 6. Therefore, when the nozzle In is connected to the socket 1s to bring the valves 14 and 40 into an open state, the fuel passages continuously connected from the nozzle In to the socket Is are formed, and the liquid fuel stored in the cartridge 3 can be supplied into the fuel storing section 5 of the fuel cell 2.

The nozzle holding mechanism 36 for holding the connected state when the nozzle In is connected to the socket 1s is disposed on the front outer cylinder portion 31a. The nozzle holding mechanism 36 has the hook portion 36a which is protruded toward the inner diameter side of the front outer cylinder portion 31a and an elastic body 36b which applies a pressing force to the hook portion 36a so as to hold the nozzle 1n.

The hook portion 36a is applied with a pressing force toward the inner diameter side by an elastic force of the elastic body 36b which is disposed on the outer surface of the front outer cylinder portion 31a and also retractable to the outer diameter side. The nozzle holding mechanism 36 holds the connected state of the nozzle In and the socket 1s by engaging the hook portion 36a with the peripheral groove 11e of the nozzle head 11 when the nozzle In is connected to the socket 1s. In the connected state, the nozzle In is elastically held by the hook portion 36a, and if an excessive force of bending, twisting or the like is applied to the nozzle In, the hook portion 36a retracts to release the connected state of the nozzle In and the socket 1s.

The key groove 54, which is a groove extended axially and functions as fuel identification means, is formed in the inner diameter side of the front outer cylinder portion 31 a. The key groove 54 has a shape to engage with the key portion 13 of the nozzle In described above. Since the key portion 13 and the key groove 54 have paired shapes, an injection error or the like of the liquid fuel can be prevented by, for example, defining the shape depending on the liquid fuel. In other words, the key portion 13 is determined to have a shape complying with a type (type, concentration or the like) of the liquid fuel, and the key groove 54 is determined to have a shape complying with the key portion 13, so that only the cartridge 3 which stores a liquid fuel suitable for the fuel cell 2 can be made connectable. Thus, it becomes possible to prevent an operation failure and property degradation due to an injection error of the liquid fuel.

The connection and separation of the above coupler 1 are performed as follows. To connect, the key groove 54 formed in the socket Is and the key portion 13 formed on the nozzle 1n are aligned, and the nozzle In is inserted into the socket Is. When the nozzle In is inserted into the socket Is, the recessed portion 11d of the nozzle head 11 is first fitted into the tip end of the elastic holder 37 of the socket 1s to form a contacting seal face between them, and the periphery of the liquid fuel passage is sealed before the valves 14 and 40 are brought into an open state.

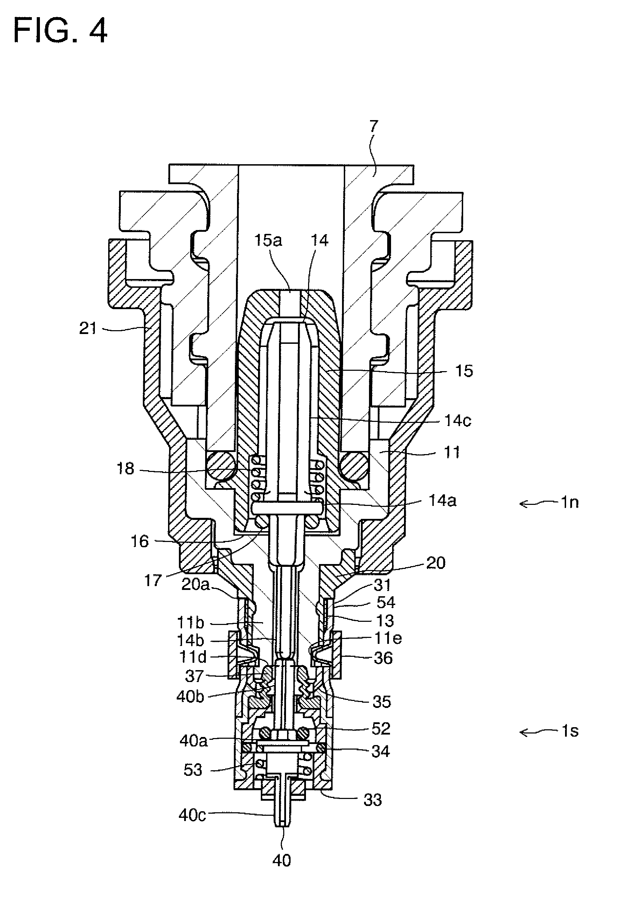

When the nozzle In is further inserted into the socket Is, the tip end of the rod section 40b of the socket Is and that of the rod section 14b of the nozzle In are contacted. When tile nozzle In is further inserted into the socket Is, the valve 40 of the socket Is retracts to open, the valve 14 of the nozzle In retracts to open to establish the liquid fuel passage between them, and the liquid fuel stored in the cartridge 3 is supplied to the fuel storing section 5 of the fuel cell 2. FIG. 4 shows a state that the socket Is and the nozzle In are connected. In the connected state, the nozzle holding mechanism 36 of the socket 1s is engaged with the peripheral groove 11e of the nozzle head 11 to hold the connected state of the nozzle In and the socket Is.

On the other hand, when the nozzle In is removed from the socket Is, an operation opposite to the above connecting operation is performed. Specifically, when the nozzle In is pulled out of the socket 1s, first the nozzle holding mechanism 36 and the peripheral groove 11e of the nozzle head 11 are disengaged. And, when the nozzle In is further pulled, the valve 14 of the nozzle In is moved to the front end side, and the liquid fuel passage in the nozzle In is closed. When the nozzle In is further pulled out, the valve 40 of the socket Is is also moved toward the tip end, and the liquid fuel passage in the socket Is is closed. Finally, the rod section 14b of the nozzle In and the rod section 40b of the socket Is are separated from each other, and the recessed portion 11d of the nozzle head 11 is also separated from the elastic holder 37 to release the seal, thereby returning to the unconnected state as shown in FIG. 2.

The coupler 1 according to the invention has a feature that the rod section on the contact side of at least one valve selected from the valve 14 on the side of the nozzle 1n described above and the valve 40 on the side of the socket Is, namely at least one selected from the rod section 14b and the rod section 40b, is mainly made of the metal member. The valve which is assumed that the rod section of the contact side is mainly made of the metal member is preferable that at least the surface portion of the head section and the rod section (rod section on the rear end side) on the side opposite to the contact side is made of a non-metallic material, and specifically, it is preferably made of a resin material. A case that the rod section 40b of the valve 40 on the side of the socket 1s is mainly made of a metal member is described below.

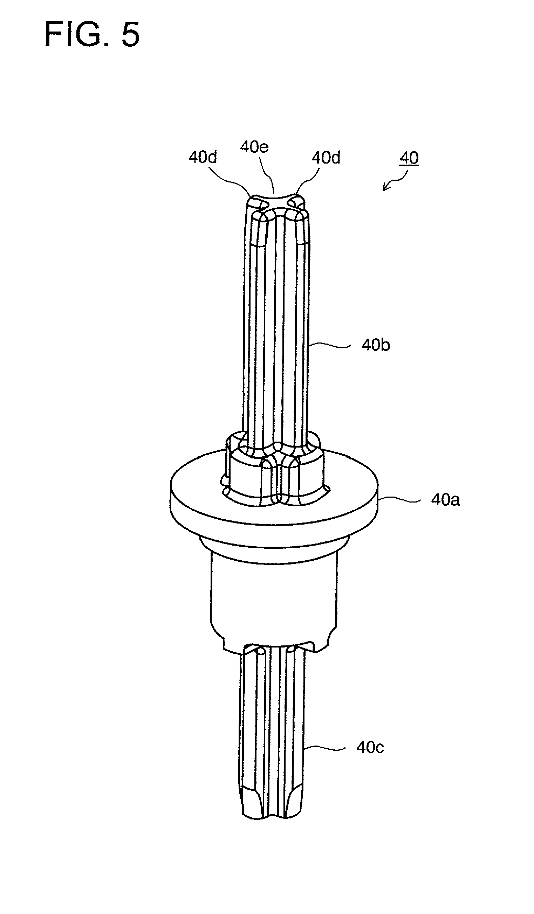

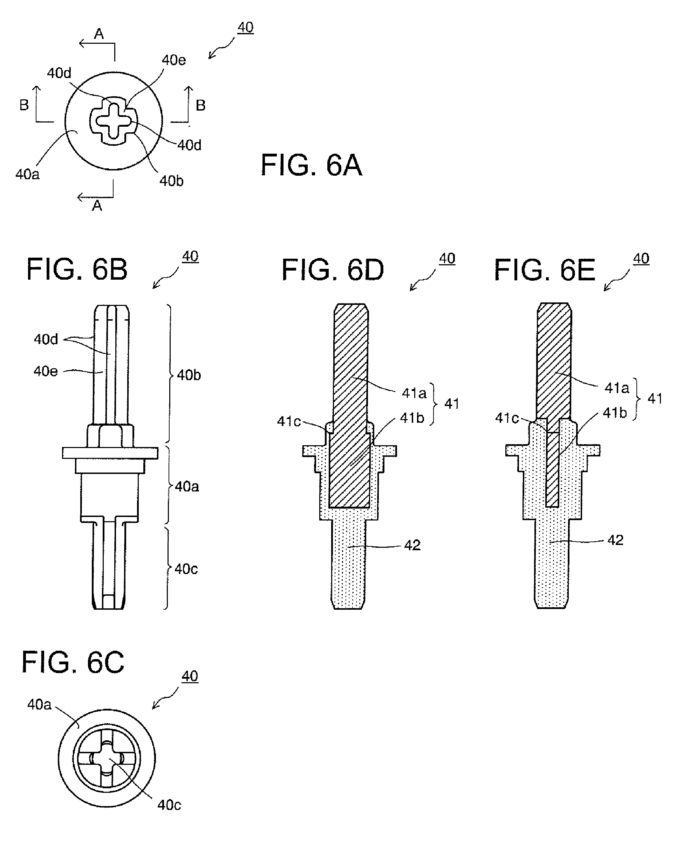

FIGS. 5 and 6 show an example of the valve 40 that the rod section 40b is mainly made of a metal member. Here, FIG. 5 is an appearance view of the valve 40, FITS. 6A to 6C are a top view, a plan view and a bottom view of the valve 40, and FIGS. 6D and 6E are an A-A sectional view and a B-B sectional view of FIG. 6A.

As shown in FIG. 5 and FIGS. 6A to 6C, the valve 40 has the head section 40a which is formed at an almost intermediate position axially, and the rod sections 40b and 40c which are formed at opposite ends axially. The head section 40a is determined to have, for example, a three-stage structure, including a large-diameter section having a large diameter on the contact side (upper side in the drawing), an intermediate-diameter section having a diameter smaller than the large-diameter section toward the opposite side (lower side in the drawing), and a small-diameter section having a diameter smaller than the intermediate-diameter section.

For example, the rod sections 40b and 40c are formed with four projected portions 40d which protrude from the shaft center toward the outer diameter side to form a cross-shaped cross-sectional shape when viewed axially. And, the space between the adjacent projected portions 40d becomes a fuel passage 40e which is a passage for the liquid fuel, and the fuel passage 40e extends axially.

As shown in FIGS. 6D and 6E, the valve 40 is comprised of, for example, a metal member 41 and a resin material section 42. The metal member 41 has a rod formation section 41a which forms the rod section 40b on at least the contact side, and a buried section 41b which is used to fix to, for example, the head section 40a is disposed on the rear end side of the rod formation section 41a.

The rod formation section 41a which forms the rod section 40b substantially in its state as it is, and for example, has a cross-shaped cross-sectional shape when viewed axially as described above. The root portion of the rod section 40b may be covered by the resin material section 42, and the root portion of the rod section 40b may not be necessarily formed of only the rod formation section 41a. And, the buried section 41b has, for example, a plate shape and arranged mainly in the head section 40a.

On the other hand, the resin material section 42 is formed to cover the buried section 41b of the metal member 41 and forms the head section 40a and the rod section 40c on the rear end side. And, the resin material section 42 may be formed to cover the periphery of the rod formation section 41a at the root portion of the rod section 40b as described above.

Thus, the rod section 40b of the valve 40 is mainly made of the metal member 41, so that the strength can be improved in comparison with the conventional valve made of only the resin material, and deformation or breakage can be suppressed when the socket Is and the nozzle In are connected or separated. And, the rod section 40b is contacted by the liquid fuel only when the socket Is and the nozzle In are connected, namely when the liquid fuel is supplied from the fuel cartridge 3 to the fuel cell 2. In other cases, the rod section 40b is not contacted by the liquid fuel, so that a problem of corrosion does not occur easily even when the rod section 40b is made of the metal member 41.

On the other hand, the portions from the head section 40a to the rear end side, namely the head section 40a and the rod section 40c, are arranged within the socket Is which is connected to the fuel storing section 5 and the fuel receiving portion 6 and tend to be easily corroded because they are always in contact with the liquid fuel. But since at least the surface portion is determined to be the resin material section 42, easy occurrence of the corrosion problem can be suppressed.

As the above metal member 41, one excelling in fuel resistance such as methanol resistance is preferable. Its preferable examples include SUS304 which is stainless steel containing 18% of chromium and 8% of nickel, SUS316 which is stainless steel containing 18% of chromium, 12% of nickel and molybdenum (Mo) and more excelling in corrosion resistance, and titanium or titanium alloy, but they are not necessarily exclusive.

The surface of the metal member 41, and particularly the surface of the rod formation section 41a, is preferably undergone the surface treatment to improve the fuel resistance such as methanol resistance. Preferable examples of the surface treatment include a passivation treatment, gold coating, fluorine resin coating, etc.

The resin material section 42 is also preferably made of a resin material excelling in fuel resistance such as methanol resistance. Its examples preferably include a general-purpose engineering plastic such as polyethylene terephthalate (PET), polybutylene terephthalate (PBT) or polyacetal (POM), and a super-engineering plastic such as polyphenylene sulfide (PPS), polyether ether ketone (PEEK) or a liquid crystal polymer (LCP).

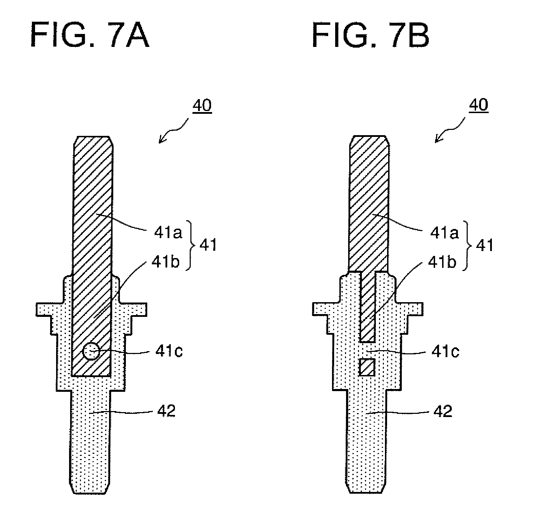

It is preferable that the buried section 41b of the metal member 41 is provided with, for example, an anchor portion 41c having a large width to suppress it from coming out of the resin material section 42. The anchor portion 41c is not necessarily limited to one having a large width but may be, for example, a circular through hole as shown in FIGS. 7A and 7B, and its shape is not particularly limited if the metal member 41 can be effectively suppressed from coming out of the resin material section 42.

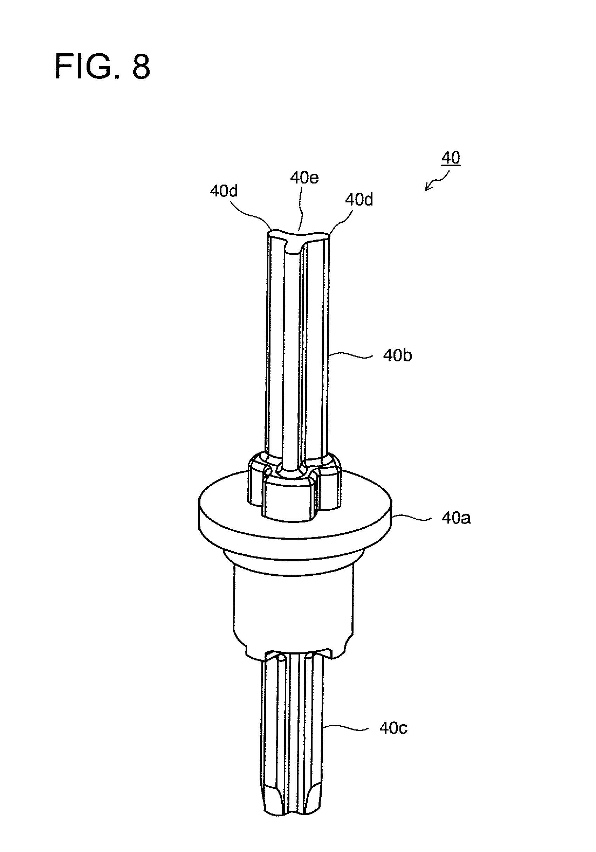

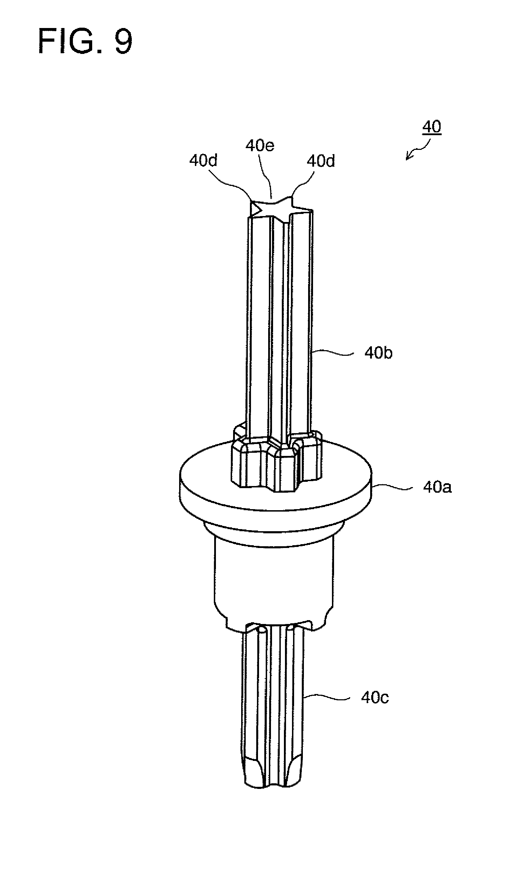

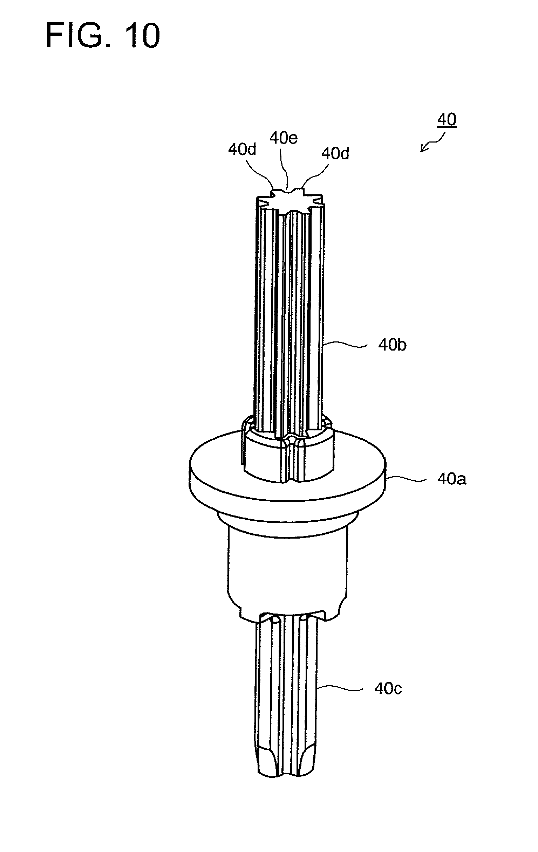

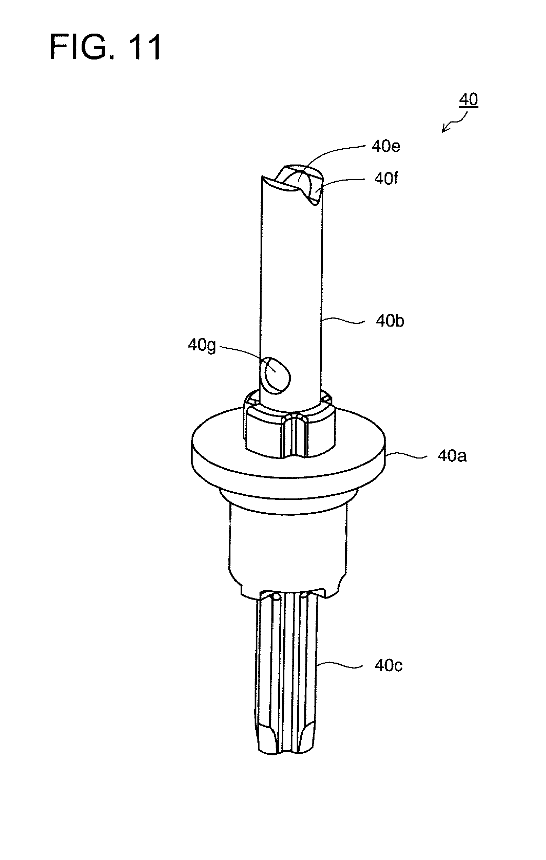

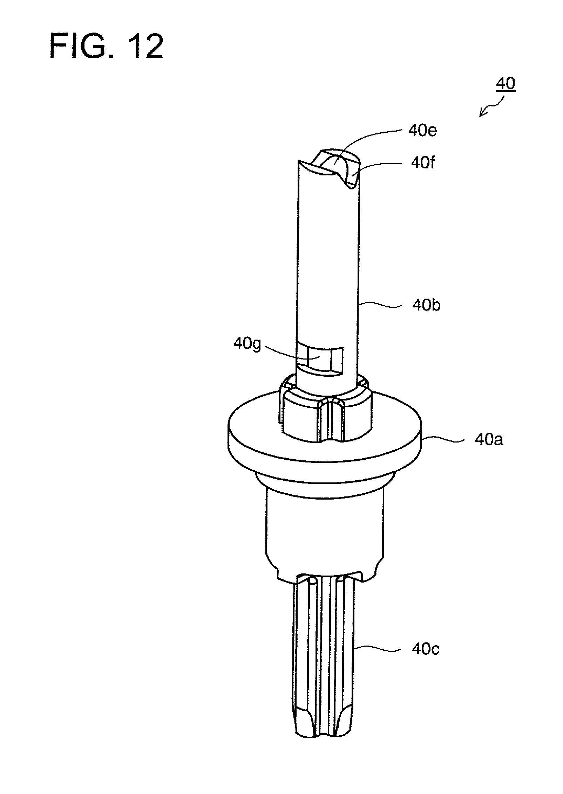

FIGS. 8 to 12 are appearance diagrams showing modified examples of the valve 40. The valve 40 according to the invention may have the rod section 40b with the projected portions 40d arranged to have a Y-shaped, star-shaped or gear-shaped cross-sectional shape when viewed axially as shown in FIGS. 8 to 10. The valve 40 according to the invention has the rod section 40b of a cylindrical shape as shown in FIGS. 11 and 12 and may have a cutout portion 40f at an end of its contact side and a hole portion 40g in the side surface of its rear end side.

The valve 40 shown in FIGS. 11 and 12 has the fuel passage 40e formed in the rod section 40b having a cylindrical shape, and the liquid fuel flows from the cutout portion 40f into the fuel passage 40e in the rod section 40b and finally flows from the hole portion 40g to the outline side. The hole portion 40g formed in the side surface of the rear end side may have a circular shape as shown in FIG. 11 or a square shape as shown in FIG. 12. For example, in a case where the hole portion 40g is formed to have a square shape in the rod section 40b as shown in FIG. 12, a machining tool which can perform cutting work and the like is moved horizontally from one side portion (e.g., the right side in the drawing) of the rod section 40b to the other side portion (e.g., the left side in the drawing) to cut off the side portion (e.g., the side portion on this side in the drawing) between them. Thus, the hole portion 40g can be formed easily and its productivity can be made excellent

The valves 40 shown in FIGS. 8 to 12 are also formed to have the rod section 40b mainly made of the metal member 41 in substantially the same manner as those shown in FIGS. 5 and 6. Thus, strength can be improved, and deformation or breakage can be suppressed when the socket Is and the nozzle In are connected or separated.

The above valve 40 can be produced by, for example, forming the resin material section 42 on the outer periphery of the buried section 41b after the metal member 41 having the rod formation section 41a and the buried section 41b is formed. In addition to a method of integrally forming by pouring a melt of a metal material into a mold, the metal member 41 can be produced by separately producing individual parts and fitting or welding them to bond together.

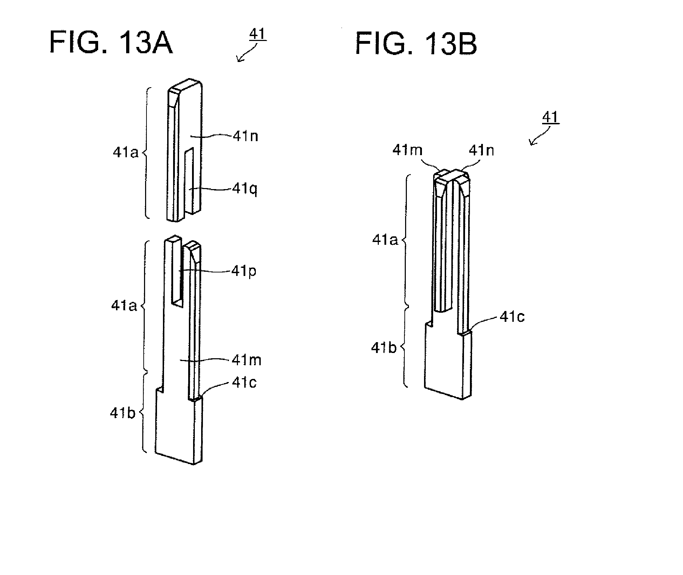

FIGS. 13A and 13B show an example of the method of producing the metal member 41 by fitting. As shown in FIG. 13A, the metal member 41 is configured of, for example, a first metal plate 41m and a second metal plate 41n. The first metal plate on has, for example, a portion which becomes the rod formation section 41a and a portion which becomes the buried section 41b, and the portion which becomes its contact side is provided with a cutout portion 41p along the shaft center. And, the second metal plate 41n has, for example, only a portion which becomes the rod formation section 41a, and a cutout portion 41q is formed in its rear end side along the shaft center.

The cutout portion 41p in the first metal plate 41m has a width (length in a direction perpendicular to the shaft center) which is formed to be similar to or slightly smaller than the thickness of, for example, the second metal plate 41n, and the cutout portion 41q in the second metal plate 41n also has a width which is formed to be similar to or slightly smaller than the thickness of, for example, the first metal plate 41 m. And, the cutout portion 41p of the first metal plate 41m and the cutout portion 41q of the second metal plate 41n are mutually press fitted, so that the first metal plate 41m and the second metal plate 41n are fixed by the cutout portions 41p and 41q mutually, and the metal member 41 having a cross-shaped cross-sectional shape when viewed axially can be obtained as shown in FIG. 13B.

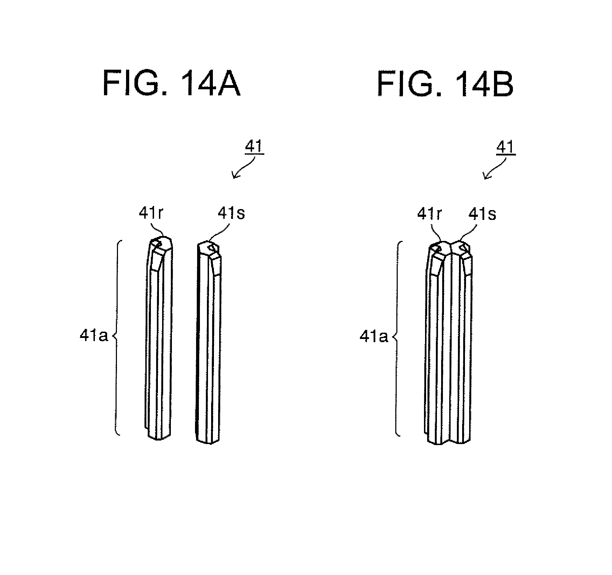

FIGS, 14A and 14B show an example of the method of producing the metal member 41 by welding. As shown in FIG. 14A, this metal member 41 is configured of, for example, a first metal material 41r and a second metal material 41s. The first metal material 41r and the second metal material 41s are determined to have a shape obtained by, for example, dividing the metal member 41 having a cross-shaped cross-sectional shape when viewed axially as shown in FIGS. 5 and 6 into two along a plane passing through the shaft center. And, the metal member 41 shown in FIG. 14B can be obtained by bonding the first metal material 41r and the second metal material 41s by welding. FIGS. 14A and 14B do not show the buried section 41b, but an appropriate buried section 41b is normally formed at the rear end side of the rod formation section 41a.

The obtained metal member 41 can be formed to have the resin material section 42, which becomes the head section 40a and the rod section 40c, by forming on, for example, the outer periphery of the buried section 41b to obtain the valve 40. As means for disposing the resin material section 42 on the buried section 41b, for example, an insert molding method can be applied, and specifically, the metal member 41 which is an insert member is loaded into a mold, a melted resin material is injected, and the buried section 41b of the metal member 41 is covered with the melted resin material, which is then cured. Thus, the valve 40 which is an integrated composite member of the metal member 41 and the resin material section 42 can be obtained.

The example that the rod section 40b of the valve 40 is mainly made of the metal member 41 was described above. As described above, the rod section 40b is not necessarily required to be wholly made of the metal member 41 (rod formation section 41a). For example, as shown in FIGS. 6D and 6E, the surface of its root portion may be formed of the resin material section 42. And, when the metal member 41 (rod formation section 41a) is effectively fixed by the resin material section 42 at the root portion, the metal member 41 may not be necessarily provided with the buried section 41b. In a case where the buried section 41b is provided on the metal member 41, its shape is not necessarily limited to the plate shape as shown in FIGS. 6D and 6E. For example, it may have the same shape as that of the rod formation section 41a, and its size can be changed appropriately.

In addition, in the coupler 1 of the invention, the rod section 14b in the valve 14 on the side of the nozzle In may be mainly made of a metal member instead of having the rod section 40b in the valve 40 on the side of the socket Is mainly made of the metal member 41. In a case where the rod section 14b in the valve 14 is mainly made of the metal member, it can be configured in substantially the same manner as the case that the rod section 40b in the valve 40 is mainly made of the metal member 41. It is more preferable for the coupler 1 of the invention that the rod section 14b in the valve 14 is mainly made of the metal member, and the rod section 40b in the valve 40 is mainly made of the metal member 41 from a viewpoint of improving the reliability.

The fuel cell 2 of the invention is described below. The fuel cell 2 of the invention is provided with the socket Is having the valve 40 which has the rod section 40b on the contact side in the above-described coupler 1 mainly comprised of the metal member 41, the fuel storing section 5 for storing the liquid fuel supplied via the socket 1s, and the fuel battery cell 4 which is an electromotive portion to generate power by using the liquid fuel. The fuel battery cell 4 in the fuel cell 2 of the invention is not limited to a particular one, and for example, there is a passive or active type DMFC to which a satellite type cartridge 3 is connected, if necessary.

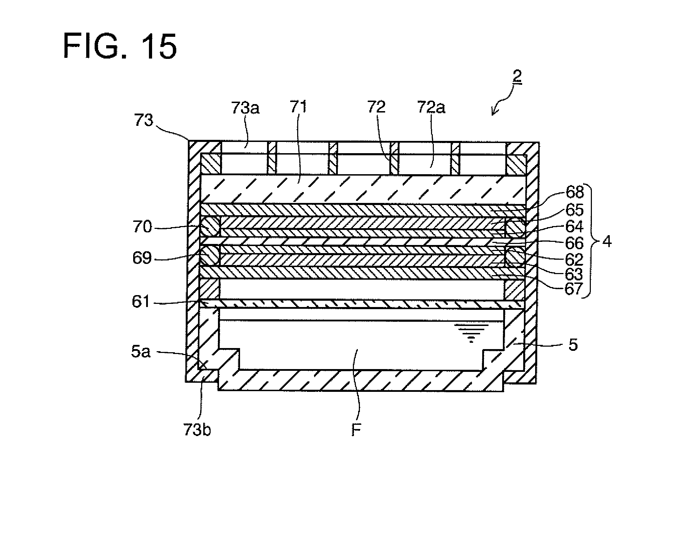

The fuel cell 2 of the invention is described below with reference to an inside vaporization type DMFC. FIG. 15 is a sectional view showing an example of the fuel cell 2 according to the invention. The fuel cell 2 is mainly composed of the fuel battery cell 4 which configures an electromotive portion, the fuel storing section 5, and the fuel receiving portion 6 having the unshown socket 1s. The fuel receiving portion 6 having the socket 1s which is not shown is disposed on the under surface of the fuel storing section 5 as shown in, for example, FIG. 1.

The fuel battery cell 4 has a membrane electrode assembly (MEA) which is composed of an anode (fuel electrode) comprising an anode catalyst layer 62 and an anode gas diffusion layer 63, a cathode (oxidant electrode/air electrode) comprising a cathode catalyst layer 64 and a cathode gas diffusion layer 65, and a proton (hydrogen ion) conductive electrolyte membrane 66 sandwiched between the anode catalyst layer 62 and the cathode catalyst layer 64. Examples of the catalyst contained in the anode catalyst layer 62 and the cathode catalyst layer 64 include a single element of platinum group elements such as Pt, Ru, Rh, Ir, Os, Pd, etc., an alloy containing a platinum group element, and the like.

Specifically, it is preferable to use Pt-Ru, Pt-Mo or the like which has high resistance to methanol and carbon monoxide for the anode catalyst layer 62 and platinum, Pt-Ni or the like for the cathode catalyst layer 64. And, a supported catalyst using a conductive carrier such as carbon material or an unsupported catalyst may be used. Examples of the proton conductive material configuring the electrolyte membrane 66 include a fluorine-based resin (Nafion (trade name, a product of DuPont), Flemion (trade name, a product of Asahi Glass Co., Ltd.) and the like) such as a perfluorosulfonic acid polymer having a sulfonic group, a hydrocarbon-based resin having the sulfonic group, an inorganic substance such as tungstic acid or phosphotungstic acid, and the like. But, they are not used exclusively.

The anode gas diffusion layer 63 superposed on the anode catalyst layer 62 serves to uniformly supply the fuel to the anode catalyst layer 62 and also serves as a power collector of the anode catalyst layer 62. Meanwhile, the cathode gas diffusion layer 65 superposed on the cathode catalyst layer 64 serves to uniformly supply an oxidant to the cathode catalyst layer 64 and also serves as a power collector of the cathode catalyst layer 64. An anode conductive layer 67 is superposed on the anode gas diffusion layer 63, and a cathode conductive layer 68 is superposed on the cathode gas diffusion layer 65.

The anode conductive layer 67 and the cathode conductive layer 68 are configured of, for example, a mesh, a porous film, a thin film or the like which is formed of a conductive metal material such as gold. Rubber O-rings 69 and 70 are interposed between the electrolyte membrane 66 and the anode conductive layer 67 and between the electrolyte membrane 66 and the cathode conductive layer 68, respectively. They prevent the fuel and the oxidant from leaking from the fuel battery cell 4.

For example, a methanol fuel is charged as liquid fuel F into the fuel storing section 5. The fuel storing section 5 is open on the side of the fuel battery cell 4, and the gas selectively permeable membrane 61 is disposed between the opening portion of the fuel storing section 5 and the fuel battery cell 4. The gas selectively permeable membrane 61 is a vapor-liquid separating film which allows the passage of only the vaporized component of the liquid fuel F but does not allow the passage of the liquid component. The component materials of the gas selectively permeable membrane 61 include, for example, a fluorine resin such as polytetrafluoroethylene. The vaporized component of the liquid fuel F means a gas mixture which consists of a vaporized component of methanol and a vaporized component of water when the aqueous methanol solution is used as the liquid fuel F and a vaporized component of methanol when pure methanol is used.

A moisture retaining layer 71 is laminated on the cathode conductive layer 68, and a surface layer 72 is laminated on the moisture retaining layer 71. The surface layer 72 has a function to adjust an introduced volume of air which is an oxidant, and its adjustment is performed by changing the quantity, size and the like of air introduction ports 72a formed in the surface layer 72. The moisture retaining layer 71 plays a role of suppressing water evaporation by partial impregnation of water generated by the cathode catalyst layer 64 and also has a function to promote uniform diffusion of the oxidant to the cathode catalyst layer 64 by uniform introduction of the oxidant into the cathode gas diffusion layer 65. For example, the moisture retaining layer 71 is formed of a member having a porous structure, and its specific component materials include a porous body or the like of polyethylene or polypropylene.

The gas selectively permeable membrane 61, the fuel battery cell 4, the moisture retaining layer 71 and the surface layer 72 are sequentially stacked on the fuel storing section 5, and they are entirely covered with, for example, a stainless steel cover 73 to configure the fuel cell 2. The cover 73 is provided with openings 73a at portions corresponding to the air introduction ports 72a which are formed in the surface layer 72. The fuel storing section 5 is provided with a terrace 5a for receiving a fixture portion 73b of the cover 73, and the terrace 5a is caught by caulking the fixture portion 73b to entirely hold the fuel cell 2 by the cover 73.

According to the fuel cell 2 having the structure described above, the liquid fuel F (e.g., the aqueous methanol solution) in the fuel storing section 5 is vaporized, and the vaporized component is supplied to the fuel battery cell 4 through the gas selectively permeable membrane 61. In the fuel battery cell 4, the vaporized component of the liquid fuel F is diffused by the anode gas diffusion layer 63 and supplied to the anode catalyst layer 62. The vaporized component supplied to the anode catalyst layer 62 causes an internal reforming reaction of methanol expressed by the following formula (1).

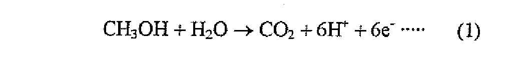

When pure methanol is used as the liquid fuel F, steam is not supplied from the fuel storing section 5, so that water produced by the cathode catalyst layer 64 and water in the electrolyte membrane 66 are reacted with methanol to cause the internal reforming reaction expressed by the formula (1), or an internal reforming reaction is caused by another reaction mechanism not requiring water without depending on the above-described internal reforming reaction of the formula (1).

Proton (H⁺) produced by the internal reforming reaction reaches the cathode catalyst layer 64 through the electrolyte membrane 66. Air (oxidant) introduced through the air introduction ports 72a of the surface layer 72 is diffused into the moisture retaining layer 71, the cathode conductive layer 68 and the cathode gas diffusion layer 65 and supplied to the cathode catalyst layer 64. The air supplied to the cathode catalyst layer 64 causes the reaction expressed by the following formula (2). This reaction causes a power generation reaction involving the generation of water.

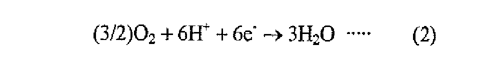

With the progress of the power generation reaction based on the above-described reaction, the liquid fuel F (e.g., an aqueous methanol solution or pure methanol) in the fuel storing section 5 is consumed. Since the power generation reaction stops when the liquid fuel F in the fuel storing section 5 is exhausted, the liquid fuel is supplied from the cartridge 3 into the fuel storing section 5 at that time or before that. The supply of the liquid fuel from the cartridge 3 is performed with the nozzle In of the cartridge 3 connected to the unshown socket Is of the fuel cell 2 by inserting into it as described above.

The coupler for a fuel cell and the fuel cell of the invention were described above, but the coupler for a fuel cell and the fuel cell of the invention are not limited to the embodiments described above. It is to be understood that in a practical phase it can be materialized with the component elements modified within the scope of technical idea of the present invention. And, various inventions can be made by an appropriate combination of the plural component elements described in the above embodiments. For example, some component elements may be deleted from the whole component elements shown in the embodiments. For example, a passive type DMFC which is under downsizing is suitable as a fuel cell, but its method, mechanism or the like is not limited when it is provided with the socket having a special valve in the coupler for a fuel cell of the invention and the liquid fuel is supplied via the socket.

### Industrial Applicability

The coupler for a fuel cell of the invention has the valve of at least the socket selected from the socket side and the nozzle side determined to have the head section and the rod sections which are disposed at opposite ends axially of the head section, and the rod section, which is contacted to the other valve, between the above rod sections determined to be mainly made of a metal member. Therefore, the valves are suppressed from deforming or breaking when the socket and the nozzle are connected or separated and can be made excellent in reliability. This coupler for a fuel cell is usefully used for the fuel cell as a power source for portable electronic equipment and other various types of electronic equipment.

At least the surface portions of the head section of the valve and the rod section on the side opposite to the contact side are made of a resin material, so that the valves are suppressed from deforming or breaking when the socket and the nozzle are connected or separated, the corrosion of the valves due to the contact by the liquid fuel can be suppressed to minimum, and a much higher reliability can be obtained. Thus, it is more usefully used for a fuel cell as a power source for portable electronic equipment and other various types of electronic equipment.

The fuel cell according to the invention is provided with the socket which is a component of the coupler for a fuel cell, and among the head section of the valve and the rod sections disposed at the opposite ends axially of the head section in the socket, the rod section on the side contacted to the valve on the side of the nozzle is mainly made of the metal member. Therefore, the valves are suppressed from deforming or breaking when the fuel cartridge is connected or separated, and reliability can be made excellent. This fuel cell is usefully used as a power source for portable electronic equipment and other various types of electronic equipment.

## Claims

1. A coupler for a fuel cell, comprising,
a socket which is provided to the fuel cell and has a valve and an urging component for urging the valve in the direction of closing it and a nozzle which is provided to a fuel cartridge for storing a liquid fuel for the fuel cell and has a valve and an urging component for urging the valve in the direction of closing it, to supply the liquid fuel stored in the fuel cartridge to the fuel cell by opening both the valves by contacting mutually when the socket and the nozzle are connected,
wherein at least one valve selected from the socket side and the nozzle side has a head section and rod sections arranged at opposite ends axially of the head section, and the rod section on the contact side is mainly made of a metal member.

2. The coupler for a fuel cell according to claim 1,
wherein at least the surface portions of the head section and the rod section provided on the side opposite to the contact side is made of a resin material.

3. The coupler for a fuel cell according to claim 2,
wherein the resin material is at least one selected from polyethylene terephthalate, polybutylene terephthalate, polyacetal, polyphenylene sulfide, polyether ether ketone and a liquid crystal polymer.

4. The coupler for a fuel cell according to claim 1, wherein the metal member is made of SUS304, SUS316, titanium or a titanium alloy.

5. The coupler for a fuel cell according to claim 1,
wherein the rod section on the contact side is undergone a surface treatment to improve its fuel resistance against the liquid fuel.

6. The coupler for a fuel cell according to claim 1,
wherein the rod section on the contact side has a fuel passage axially extended on the surface portion.

7. The coupler for a fuel cell according to claim 6,
wherein the rod section on the contact side has two or more projected portions to protrude from the shaft center toward the outer diameter side, and a space between the projected portions forms the fuel passage.

8. The coupler for a fuel cell according to claim 7,
wherein the rod section on the contact side is provided with the projected portions to have a cross-shaped, Y-shaped, star-shaped or gear-shaped cross-sectional shape when viewed axially.

9. The coupler for a fuel cell according to claim 1,
wherein the rod section on the contact side has a cylindrical shape and its side portion is provided with a hole portion.

10. The coupler for a fuel cell according to claim 1,
wherein the metal member has a rod formation section for forming the rod section and a buried section to be buried in the head section, and the buried section has an anchor portion for suppressing the metal member from dropping from the head section.

11. The coupler for a fuel cell according to claim 1,
wherein the metal member is configured by fitting two or more metal plates together.

12. The coupler for a fuel cell according to claim 1,
wherein the metal member is configured by welding two or more metal materials.

13. A fuel cell, comprising:
the socket provided with the valve having its rod section on the contact side in the coupler for a fuel cell according to claim 1 mainly made of the metal member,
a fuel storing section for storing a liquid fuel supplied via the socket; and
an electromotive portion for generating power by using the liquid fuel.
